# EUROPEAN PATENT SPECIFICATION

(11) **EP 1 976 773 B1**
(45) Date of publication and mention of the grant of the patent: **11.04.2018**
(21) Application number: 07762384.1
(22) Date of filing: 05.01.2007
(51) Int. Cl.: B31D 5/00

(54) **INFLATABLE DUNNAGE BAGS AND METHODS FOR USING AND MAKING THE SAME**
AUFBLASBARE VERPACKUNGSBEUTEL UND VERFAHREN ZU IHRER HERSTELLUNG
SACS DE FARDAGE GONFLABLES ET LEURS PROCEDES D'UTILISATION ET DE FABRICATION

(30) Priority: 23.01.2006 US 337756
(43) Date of publication of application: 08.10.2008
(73) Proprietor: Sealed Air Corporation (US), Charlotte, NC 28208 (US)
(72) Inventor: SPERRY, Laurence, Newton, MA 02159 (US); PATTERSON, Ross, Boston, MA 02127 (US)
(74) Representative: Uexküll & Stolberg
(86) International application number: PCT/US2007/000459
(87) International publication number: WO 2007/087158

(56) References cited:
- WO-A-98/14390
- US-A- 5 042 663
- US-B1- 6 561 236

## Description

### BACKGROUND OF THE INVENTION

### 1) Field of the Invention

This present invention relates generally to inflatable packing materials, such as dunnage bags.

### 2) Description of Related Art

Inflatable packing materials, such as dunnage bags, are typically used to fill void regions in containers carrying goods or items for shipment. When the dunnage bag is inflated, the items are wedged between the dunnage bag and the walls of the container or between portions of the dunnage bag. Thus the items are restricted from moving around in the container while being shipped.

Dunnage bags or similar materials come in various designs, shapes and sizes. Some of them are configured to be inflated prior to placing them into the boxes or other containers as dunnage material. Such a dunnage bag is disclosed in US 5 042 663 B1. Others are inflated after they are placed into the container. The advantage of the latter type is that they can be inflated just enough to fill most, if not all, of the empty space that is present. Even though there are a great variety of available dunnage bags, there is room for improvement in their design so as to reduce cost and increase their ease of use.

For example, in the case of dunnage bags that are configured to be inflated after they are placed into the container, it has proven challenging to develop a method and a structure for inflating such bags in a low cost and efficient manner. A dunnage bag may be inflated by inserting an inflation nozzle through a connected valve assembly of the bag. Because the bag is already within the closed container, in order to access the valve assembly either the valve assembly must extend through the container or the inflation nozzle must enter the container to reach the valve assembly.

Some dunnage bags are configured such that their valve assembly extends through a wall of the container. Such dunnage bag is disclosed in WO 98/14390 A. A valve assembly of the dunnage bag extends through an opening in a wall of the container, and comprises a flange which is glued to the exterior surface of the wall surrounding the opening. However, the wall of some containers is sometimes not strong enough to support the valve assembly when the nozzle is being inserted into the valve assembly during the inflation process. And the valve assemblies of such bags are often too costly and cumbersome for use in a high volume environment, such as a warehouse or distribution center.

In other bags, the inflation nozzle is inserted through the container wall to the valve assembly of the bag. In such bags, the valve assembly is aligned near or adjacent a predetermined area of one of the container's walls so it is possible to insert the inflation nozzle blindly through the wall and engage the valve assembly. Some bags have used glue to adhere the valve assembly against an inner surface of the wall. Such dunnage bag is disclosed in US 6 561 236 B1. This dunnage bag comprises the features of the preamble of claim 1. Its valve assembly comprises an input end which is glued to an interior wall of the container at a predetermined location. For filling the dunnage bag an inflation nozzle punctures the container wall at the predetermined location for passing fluid into the valve assembly. However, such gluing of the valve assembly to the container wall at a predetermined location is undesirable in that it requires several assembly steps including applying the glue, positioning the nozzle assembly in the desired location, and then allowing the glue to dry sufficiently to cause adhesion.

In light of the foregoing, it would be desirable to provide a structure for and method of inflating a dunnage bag within a container that allow for the proper and consistent alignment between the valve assembly within the container and the insertion of the inflation nozzle from outside the container. It would also be desirable to provide a device for holding the valve assembly against the outer wall during the inflation process and prevent the inflation nozzle from puncturing straight through the valve assembly.

### BRIEF SUMMARY OF THE INVENTION

The features of the present invention address the above problems and provide a novel inflatable dunnage bag comprising the features of claim 1, and associated methods for such dunnage bag. The valve assembly includes a plate which may include a projection, such as a hook, that provides an easy and consistent method of positioning the valve assembly within a container. The plate is also resilient and thereby configured to bias the valve assembly against an inner surface of a wall of the container. Biasing the valve assembly against the inner surface allows for an inflation nozzle to puncture through the wall of the container and the front side of the valve assembly without the need to separately adhere the valve assembly to the inner surface of the wall of the container. In order to help protect the back of the valve assembly from the inflation nozzle, the plate may include a flap that moves the back wall away from the nozzle during insertion. Also, the plate is configured for resilient flexibility in order to compensate for changes in the shape of the valve assembly during the inflation process.

Specifically, the inflatable dunnage bag includes a bag portion, a valve assembly, and a plate. The valve assembly is connected to the bag portion for allowing an inflation process to inflate the bag portion. The plate has an upper portion that is foldable in a first direction and a lower portion. Folding the upper portion in the first direction encourages the lower portion to bias at least a portion of the valve assembly in a second direction which aids in the inflation process. The plate comprises a resilient material.

In an embodiment, the valve assembly may have a front wall and a back wall. At least part of the plate may be positioned between the front wall and the back wall such that the plate protects the back wall from the inflation nozzle inserted through the front wall during the inflation process. The plate may further include a central opening and a flap, wherein the flap is adapted to direct a fluid flow through the central opening from the inflation nozzle through the valve assembly to the bag portion during the inflation process.

The plate may further have a projection extending from near the top of a longitudinal side of the plate toward the bag portion for positioning the valve assembly such that, when the projection is engaged with the container, the valve assembly is adjacent to one of the walls of the container. For example, the plate may have a hook that extends beyond the front wall and the back wall. The plate may also have a break in the material for added flexibility.

In another aspect, the present invention provides a supply of inflatable dunnage bags according to claim 1 in roll form. The supply may include a tube of material and a plurality of valve assemblies. The tube of material may have a plurality of alternating first and second heat seals that define a plurality of dunnage bags. In particular, each first heat seal defines a bottom end of a bag while each second heat seal defines a top end of a bag. The tube may further include a plurality of lines of weakening for detaching the dunnage bags from the supply. The supply also includes a plurality of valve assembles. Each valve assembly is connected to a dunnage bag for allowing an inflation process to inflate the dunnage bag. And each valve assembly may have a plate that is substantially between a front wall and a back wall of the valve assembly. The plate is configured to protect the back wall from an inflation nozzle inserted through the front wall during the inflation process. The plate may further include a flap, a projection, or combination thereof.

The present invention also provides a method for using dunnage bags according to claim 3. For example, according to one embodiment, the present invention provides a method for packaging an item for shipment. The method includes placing the item, a bag portion, and a valve assembly having a hook into a container and engaging the hook to the container so as to position the valve assembly near an outer wall of the container. Next, an inflation nozzle is inserted through the outer wall of the container and into the valve assembly such that the bag portion is inflated by introducing a fluid flow into the bag portion from the inflation nozzle and through an internal passageway defined by the valve assembly.

The method may also include a step of closing the container prior to inflating the bag portion. The valve assembly may include a flap which is engaged by the inflation nozzle such that the flap moves a back wall of the valve assembly away from the inflation nozzle and helps direct the fluid flow through the internal passageway. The present invention provides also a method of making the inflatable dunnage bags according to claim 1. The method includes forming a plurality of spaced and transverse first seals along a tube of material. Each first seal defines a first end of a dunnage bag. The method also includes forming a transverse line of weakening on an upstream side of each first seal along the tube. Each line of weakening defines a second end of a dunnage bag, wherein each dunnage bag extends from a second end to a first end in an upstream direction. A valve assembly is inserted into each dunnage bag between a top layer and a bottom layer of the tube of material by opening a portion of each line of weakening. A second transverse seal is formed on an upstream side of each line of weakening along the tube such that the second transverse seal connects the valve assembly to the dunnage bag and seals the second end of the bag portion. The method may also include a step of rolling the dunnage bag into a supply roll.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a perspective view of an inflatable dunnage bag in use in a container according to an embodiment of the present invention;
Figure 2a is a frontal view of the inflatable dunnage bag of Figure 1, wherein the dunnage bag is in a non-inflated state;
Figure 2b is an exploded view of the inflatable dunnage bag of Figure 2a according to an embodiment of the present invention;
Figure 3a is a valve assembly according to an embodiment of the present invention;
Figure 3b is an exploded view of the valve assembly of Figure 3a according an embodiment of the present invention;
Figure 4a illustrates a hook of the valve assembly according to an embodiment of the present invention being positioned near a wall of the container;
Figure 4b illustrates the hook of Figure 4a engaging the wall of the container;
Figure 4c illustrates the closing of the minor flaps generally perpendicular to the valve assembly;
Figure 4d illustrates the closing of the major flaps generally parallel to the valve assembly;
Figure 5a is a partial interior view of an inflation nozzle engaging the valve assembly according to an embodiment of the present invention;
Figure 5b is a side view of the valve assembly of Figure 5a before the introduction of the inflation nozzle;
Figure 5c is a side view of the valve assembly of Figure 5a illustrating the inflation nozzle engaging a flap of the valve assembly according to an embodiment of the present invention; and
Figure 6 is a schematic view of a method of making inflatable dunnage bags according to an embodiment of the present invention.

### DETAILED DESCRIPTION OF THE INVENTION

The present invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout.

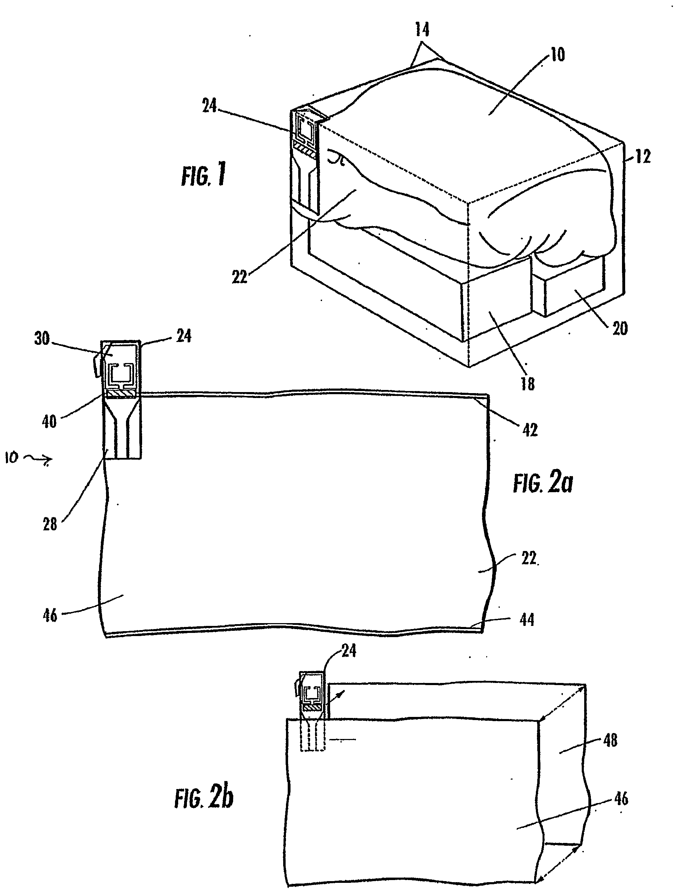

In one aspect, and as shown in Figure 1, the present invention provides an inflatable dunnage bag **10** for filling empty space within a container **12,** such as a cardboard or paperboard box. The container **12** includes walls **14** that define an interior for storing one or more items **18, 20.** As shown in Figure 2a, the inflatable dunnage bag **10** may include a bag portion **22** and a valve assembly **24.** In general, the valve assembly **24** is connected to the bag portion **22** and provides an internal passageway into the bag portion **22** for inflating the bag portion **22.** The bag portion is generally pillow shaped when inflated. In the container, as shown in Figure 1, the bag portion **22** may fill most of the empty space within the interior and conform to the items in the container **12,** thereby restricting the items **18, 20** from shifting around. Also, the inflated bag portion **22** may increase the integrity and stacking strength of the container **12.**

The bag portion may comprise a film such as a film comprising a flexible, sealable material. For example, the film may comprise one or more thermoplastic polymers such as one or more of any of the following: polyethylene homopolymer or copolymer, including low-, medium-, or high-density polyethylene, polypropylene homo- or copolymer, polyester, and polyamide. In addition, the film may have only one layer (monolayered) or may comprise multiple layers. For example, the film may include an outer layer comprising polyester or nylon for strength and abrasion resistance, and/or may comprise an inside or sealing layer comprising one or more of the polyethylenes listed above. The methods of forming the bag portion may vary. For example and as further explained below, the bag portion may be formed from a flattened tube of material. The two opposite and open ends of the tube of material may be sealed closed through a heat process forming two sealed ends of the bag portion. Another method of forming the bag portion includes sealing together the four sides of two separate sheets of material such that the bag portion has four sealed sides. Or the method may include taking a single sheet of material and folding it along a center line and sealing three sides together such that the bag portion has three sealed sides.

As shown in Figures 2a and 2b, the bag portion **22** may include a front film **46** and a back film **48,** with each film extending between two sealed ends, referred to herein for descriptive purposes only as the top end **42** and the bottom end **44.** The valve assembly **24** is connected to the bag portion **22** by the top end **42.** More specifically, the valve assembly **24** may extend through the top end **42** such that one portion of the valve assembly, referred to as the outlet end **28,** lies between the front film **46** and the back film **48** of the bag portion, and the other portion of the valve assembly, referred to as the inlet end **30,** lies outside the bag portion.

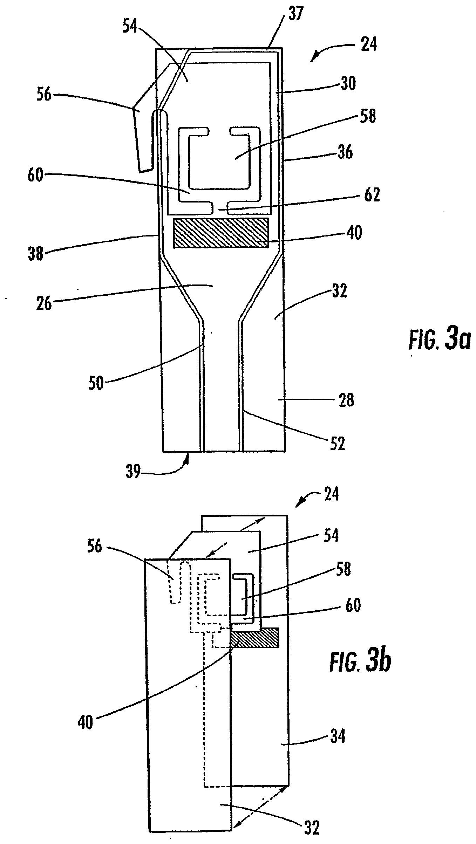

According to an embodiment of the present invention and as shown in Figures 3a and 3b, the valve assembly **24** may comprise a front wall **32** and a back wall **34.** For example, the front and back walls may comprise one or more of the thermoplastic polymers described above, such as a low-density polyethylene. As shown, the front and back walls **32, 34** may be heat sealed together along two opposed long edges **36, 38** and a top edge **37.** The valve assembly **24** defines an internal passageway that extends from the inlet end **30** through the outlet end **28** and a bottom opening **39** to the interior of the bag. Furthermore, the internal passageway may include a valve mechanism **26** that is adapted to facilitate the flow of fluid into the bag and inhibit the flow of fluid out of the bag, also known as a one-way valve or one-way inflation valve. For example, the valve mechanism **26** may be produced by narrowing the internal passageway from the inlet end **30** to the bottom opening **39.** This may be done by heat sealing the front and back walls **32, 34** together along two strips **50, 52.** For example and as illustrated, the two strips may form a general "Y" shape, such that the width of the internal passageway decreases as it approaches the bottom opening. The general shape of the passageway may vary. Examples of other shapes that may be employed in the present invention include but are not limited to the shapes disclosed in US 5 830 780 B1 and 6 561 236 B1. As explained in more detail further below, the valve assembly **24** may include a patch of ink **40** on an inner surface of one of the walls **32,34.**

Normally, the two sides of the valve mechanism **26,** i.e. the front and back walls **32, 34,** are in contact with each other and the internal passageway is closed. A fluid flow, such as an air flow, introduced from the inlet end **30** toward the bottom opening **39** separates the front and back walls **32, 34** and opens the internal passageway such that the fluid flow enters and inflates the bag portion **22.** Once the fluid flow is stopped the walls of the valve mechanism **26** naturally come back together, thereby inhibiting the fluid from escaping back through the internal passageway. The back pressure from the inflated bag portion **22** aids in sealing the internal passageway by encouraging the front and back walls **32, 34** together.

According to one of the features of the present invention, the valve assembly **24** includes a plate **54.** The plate may be connected to or contained substantially within the inlet end **30** of the valve assembly. For example, the plate **54** or a portion of the plate **54** may lie between the front and back walls **32, 34,** as shown in Figures 3a and 3b. Also, in addition to or instead of having a portion of the plate contained within the inlet end, a portion may be connected to either the front or back wall of the inlet end. For example, the front and back walls may be sealed to portions of the plate either by heat or an adhesive or the plate may be connected to the back wall outside of the inlet end. For another example, an upper portion of the plate may extend through the top edge of the inlet end and a lower portion of the plate may be contained within the inlet end. In this example, the front and back walls may or may not be sealed to the upper portion of the plate. And thus in the case of not sealing, the top edge of the inlet end may be partially or completely unsealed.

The plate is resilient but may be more rigid than the bag portion and/or the front and back walls **32, 34** of the valve assembly. For example, according to one embodiment, the bag portion and the front and back walls of the valve assembly may comprise a low density polyethylene while the plate may comprise medium or high density polyethylene. Further, the plate may be thicker than the thickness of the front and back walls **32, 34,** for example any of at least 10, 20, 30, 50, and 80 times as thick as the front wall **32.** The plate is resilient (e.g., comprise a resilient material) so that when the plate is bent or folded (for example when folded with a flap of the container) the plate may bias at least a portion of the valve assembly (e.g., the front wall **32)** against an inner surface of the container for receiving the inflation nozzle, as discussed in more detail below with regards to the inflation process. Also, although the term "plate" is used herein to describe the illustrated plate **54,** the term should not be construed as being limited to a flat structure having a uniform thickness, and any shape that achieves one or more of the features of the described plate **54** should be construed to fall within the scope of the invention.

The plate may include a projection **56** and a flap **58.** According to the illustrated embodiment, the plate **54** has a general rectangular overall shape that matches the overall shape of the inlet end **30.** The projection **56** may extend from near the top of a longitudinal side of the plate **54** through the longitudinal sealed edge **38** of the inlet end **30** and toward the bag portion. Also, the projection **56** may extend beyond the front and back walls **32, 34** of the inlet end **30** and/or the front and back walls **32, 34** may be sealed (e.g., heat or adhesively) to the projection **56.** In general, the projection **56** may define an upper portion of the plate **54** extending above the projection **56** and a lower portion of the plate **54** extending below the projection **56.** The lower portion of the plate **54** may include a central opening **60** for the flap **58.** The flap is configured to be pivotal from the rest of the plate **54** through the central opening **60.**

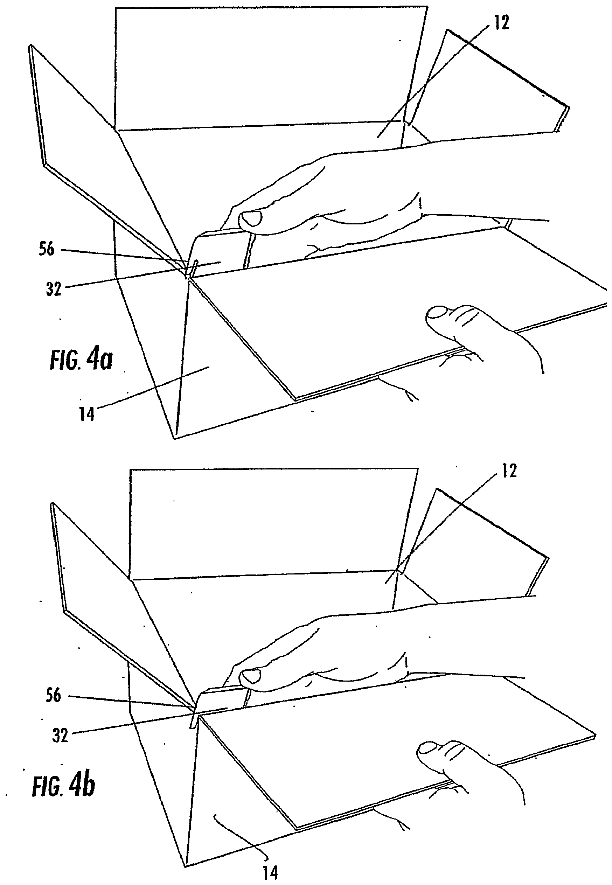

The projection **56** is configured to engage a wall **14** of the container **12** for positioning the valve assembly **24** within the container **12,** as illustrated in Figures 4a and 4b. More specifically, the projection **56** aligns the front wall **32** of the inlet end **30** near or against a predetermined area of an inner surface of a wall **14** of the container **12** for an inflation process. For example and as illustrated, the projection **56** may be shaped as a hook that positions the valve assembly by straddling a first wall of the container, such that the hook is adjacent the outer surface of the first wall and the front wall of the inlet end is adjacent an inner surface of a second wall of the container that is generally perpendicular to the first wall. In another embodiment, the hook may be inserted into the first wall, such that hook is within a corrugated flute structure of the wall. Although the projection is shaped as a hook in the illustrated embodiment, the shape of the projection may vary. For example the projection may be a lip, a hanger, or any other configuration suitable for engaging the container for positioning or aligning the front wall of the inlet end near or against a wall of the container.

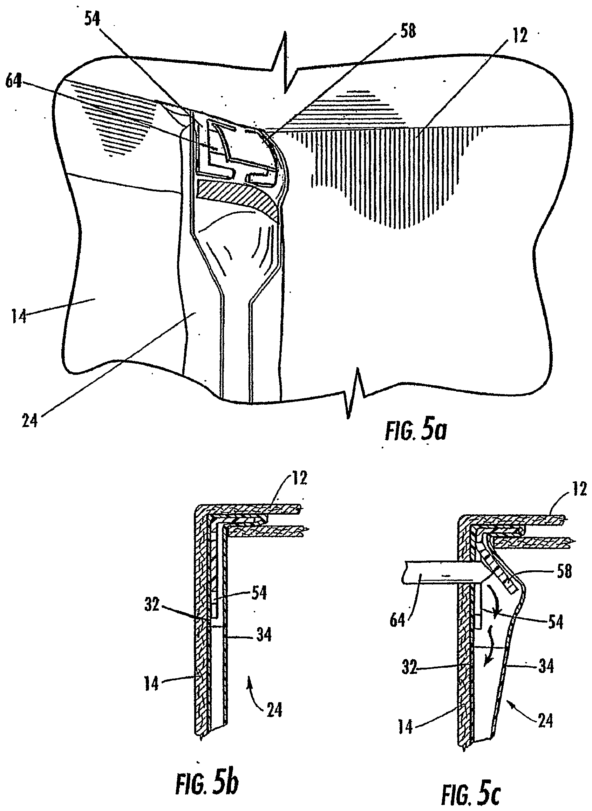

As shown in Figures 5a through 5c, during the inflation process, an inflation nozzle **64** may puncture through the predetermined area of the outer wall **14** of the container and engage the front wall **32** of the inlet end. For example and as shown, the inflation nozzle may puncture the outer wall of the container and puncture the front wall at the inlet end and thereby create an entrance for the nozzle to the internal passageway defined by the valve assembly. Or the inflation nozzle may puncture the outer wall of the container and enter through the front wall by a pre-cut hole as further disclosed in US 6 561 236 B1.

The plate **54** may be positioned between the front wall **32** and the back wall **34** such that the plate **54** protects the back wall **34** from the nozzle **64** when the nozzle punctures or enters through the front wall **32.** Moreover, the flap **58** may be aligned with the nozzle **64** such that nozzle **64** engages the flap **58** as the nozzle **64** enters the inlet end **30.** The engagement of the nozzle **64** against the flap **58** causes the flap to pivot away from the nozzle which in turn causes the flap **58** to engage and further protect the back wall **34** by moving the back wall away from the nozzle **64,** as best illustrated by Figure 5c. The pivoted flap **58** may also facilitate the flow of the inflation fluid (e.g., air) from the nozzle through the internal passageway to the bag portion by directing the fluid generally downwards through the internal passageway defined by the valve assembly **24,** also illustrated by Figure 5c.

According to an embodiment of the present invention, the plate **54** may also define a bottom break **62** of material below the flap **58.** When the flap **58** is moving the back wall **34** away from the inflation nozzle **64,** the longitudinal edges **36, 38** of the inlet end **30** will be encouraged to move inwardly to compensate for the movement of the back wall **34.** In other words, the bottom break **62** facilitates the flexing of the plate **54** inwardly along with the longitudinal edges **36, 38** such that more room for the back wall **34,** and thus the flap **58,** is provided in a backward direction. This facilitates a deeper penetration of the inflation nozzle **64** into the inlet end **30** and promotes a more efficient inflation process.

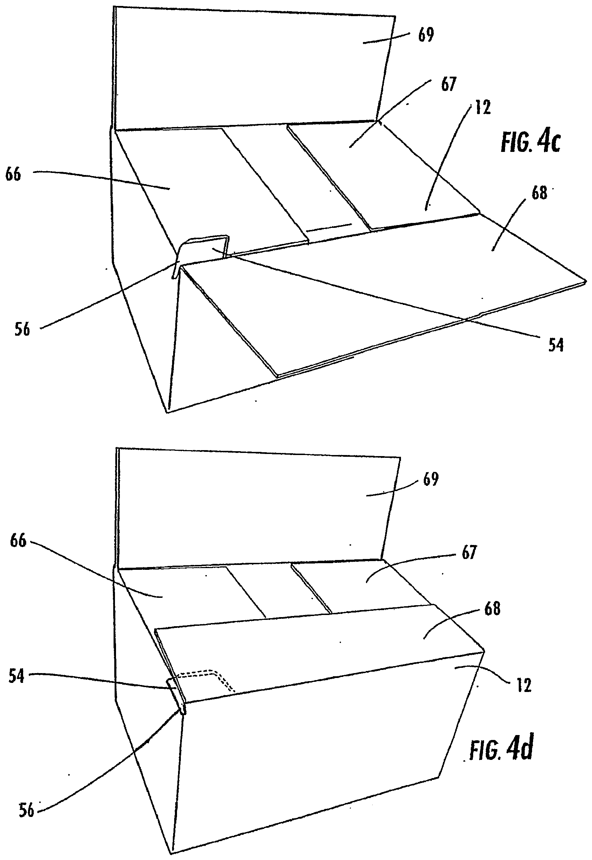

Another feature of the present invention is a method of packaging one or more items within a container for shipping and handling using a dunnage bag according to the invention. According to an embodiment of the present invention, one or more items are placed within a container along with the bag portion and the connected valve assembly as described above. The front wall of the valve assembly is positioned near or against the inner surface of a predetermined area of an outer wall of the container. The front wall **32** is positioned by engaging the projection **56** of the valve assembly onto the wall of the container, as shown in Figures 4a and 4b. After positioning the bag portion and the valve assembly within the container, the container may be closed. For example, the container may be a cardboard box with a top opening closable by two pairs of opposing flaps. As shown in Figure 4c, a set of opposing minor flaps **66, 67** that are generally perpendicular to the plate **54** of the valve assembly may be closed first such that one of the minor flaps **66** extends across the width of the plate **54.** Then the pair of major flaps **68, 69** may be closed, as shown in Figure 4d.

Due to an upper portion of the plate **54** extending above the box, one of the major flaps **68** may fold over the upper portion of the plate **54** while the minor flap **66** holds the plate **54** in place. Furthermore, folding the upper portion of the plate in a first direction that is essentially away from the inner surface of the wall creates a spring or biasing force in the lower portion of the plate such that the central opening and the front wall of the valve assembly is further encouraged against the inner surface of the wall of the container in a second direction (i.e. toward the inflation nozzle). To hold the flaps in a closed position the flaps may be taped. With the flaps **66, 68** closed the upper portion of the plate **54** remains in a folded position between the flaps **66, 68** as shown in Figures 5b and 5c, while the lower portion of the plate **54** is encouraged against the inner surface of the outer wall of the container.

Next, and as shown in Figure 5a and 5c, the inflation nozzle **64** may puncture through the predetermined area of the outer wall **14** and the front wall **32** of the inlet end and thus create an entrance into the internal passageway defined by the valve assembly **24.** In particular, the spring or biasing force created by the folded over top end of the plate **54** helps to hold the front wall **32** in place such that the inflation nozzle **64** punctures through the front wall **32** rather than just push the front wall **32** away from the inner surface of the outer wall **14** and nozzle **64.** Once inserted into the inlet end of the valve assembly, the inflation nozzle can deliver a fluid flow through the internal passageway and into the bag portion and thus inflate the bag portion such that bag portion occupies most of the empty space within the box, as illustrated in Figure 1.

The type of inflation nozzle and other machinery used to delivery and monitor the fluid flow may vary. For example, the inflation nozzle may be part of an inflation apparatus disclosed in US 6 253 806 B1; 6 253 919 B1; 6 561 236 B1; or 6 729 110 B1. Examples of inflation fluids include gas, such as air or lighter-than-air gas, and liquids, such as liquid water or one or more liquid precursors that may subsequently react, for example, to form a foam.

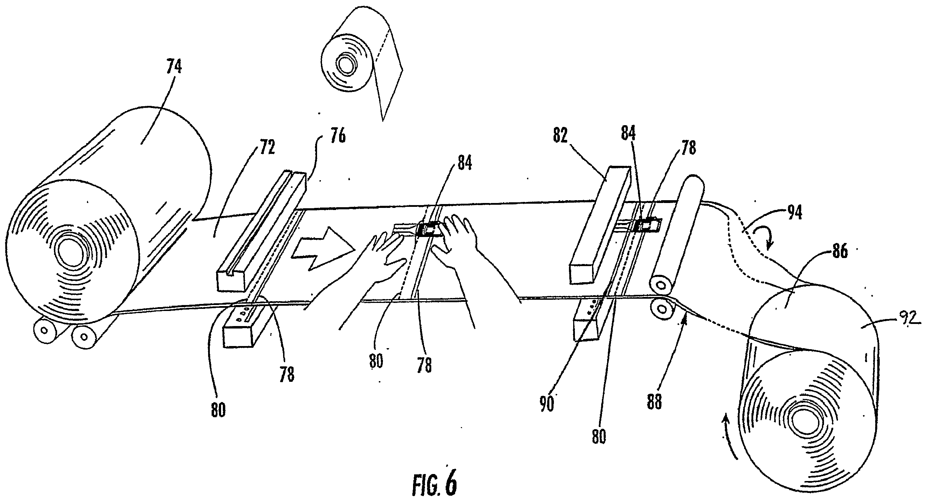

Yet another feature of the present invention is providing and producing a supply of inflatable dunnage bags according to the invention. The method may include providing a tubular stock of material. For example and as shown in Figure 6, the tubular stock of material **72** may be from a supply roll **74.** The material **72** is advanced in a downstream direction (indicated by the arrow) in a flat manner such that the material **72** defines a top film **86** and a bottom film **88.** At a first station **76,** a first heat seal **78** is formed across the width of the material **72.** On the upstream side of the first heat seal **78,** a first line of weakening **80** is formed across the width of the material **72.** For example, the line of weakening **80** may comprise a series of perforations or scoring. A portion of a valve assembly **84,** which may also be supplied by a supply roll, is inserted between the top film **86** and the bottom film **88** of the material **72.** More specifically, the valve assembly **84** may be inserted by opening a portion of the first line of weakening **80** and inserting the portion of the valve assembly **84** between the top film **86** and the bottom film **88** in an upstream direction away from the adjacent first heat seal **78.** Once the valve assembly **84** is inserted a second heat seal line **90** is formed across the width of the material **72** and the valve assembly **84** on the upstream side of the first line of weakening **80** at a second station **82.** The second heat seal line **90** connects the valve assembly **84** to the material **72.**

Instead of connecting the valve assembly by inserting it through an opened portion of a line of weakening, the valve assembly may be connected along the side of the tube of material. For example, instead of tubular material, the material may be a sheet folded along a center line such that material defines a top film and a bottom film and an opened side edge. The valve assembly may be connected by inserting a portion of the valve assembly into the opened side edge and then forming a seal along the side edge to connect the valve assembly and seal the side edge.

An internal passageway of the valve assembly may include a patch of ink (seen best in Figures 2a and 3a as **40)** at the point that the second heat seal line crosses the valve assembly. The purpose of the patch of ink is to prevent the two walls of the valve assembly **84** from adhering to each other during the heat sealing process and thereby blocking the internal passageway. It is not necessary to use ink, and other known methods of preventing the heat seal could be used, including a patch of a different coating applied to the walls or an insert placed between the walls.

The above steps of forming a first heat seal line **78,** forming a first line of weakening **80,** inserting a valve assembly **84,** and forming a second heat seal line **90** may be repeated at set intervals along the length of tubular material **72** and thereby produce a number of inflatable dunnage bags. More specifically, each second seal line with a connected valve assembly defines a top end of an inflatable dunnage bag. The inflatable dunnage bag extends in an upstream direction to a first seal line, wherein the first seal line defines the bottom end of the inflatable dunnage bag. Adjacent inflatable dunnage bags are delimited by the first lines of weakening and may be detachable along the first lines of weakening. This arrangement allows the inflatable dunnage bags to be rolled up into a roll supply of inflatable dunnage bags **92,** which makes subsequent use for packing operations more efficient. Furthermore, as shown in Figure 6, before rolling up the inflatable dunnage bags, the tube of material may be folded in its length direction by a folding plow **94** or other device in order to compact the width of the supply roll of inflatable dunnage bags **92.**

Many modifications and other embodiments of the invention set forth herein will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An inflatable dunnage bag (10) for a container defining one or more walls, the inflatable dunnage bag comprising:
a bag portion (22); and
a valve assembly (24; 84) connected to the bag portion for allowing an inflation nozzle (64) to inflate the bag portion (22) and configured to allow a fluid into the bag portion during an inflation process and to inhibit the fluid from escaping from the bag portion when the bag portion is inflated;
**characterized in that**
the valve assembly (24; 84) includes a resilient plate (54) having an upper portion and a lower portion;
wherein the upper portion is foldable relative to the lower portion so that, when the upper portion is folded, the lower portion biases at least a portion of the valve assembly (24; 84) in a direction opposite the direction in which the upper portion is folded.

2. The inflatable dunnage bag according to Claim 1, wherein the valve assembly (24; 84) is connected to an end (42) of the bag portion (22).

3. The inflatable dunnage bag according to any of the preceding claims, wherein the plate (54) includes a projection (56) extending from near the top of a longitudinal side of the plate (54) toward the bag portion (22), thereby being configured to engage the container such that, when the projection (56) is engaged with the container, the valve assembly (24: 84) is adjacent to one of the walls (14) of the container (12).

4. The inflatable dunnage bag according to any of the preceding claims, wherein the valve assembly (24) further includes a front wall (32) and a back wall (34) and the plate (54) is positioned at least partially between the front wall (32) and the back wall (34).

5. The inflatable dunnage bag according to any of the preceding claims, wherein the plate includes a central opening (60) and a flap (58), wherein the flap (58) is oriented to direct a fluid flow through the central opening (60) from an inflation nozzle (64) through the valve assembly (24; 84) to the bag portion (22).

6. The inflatable dunnage bag according to any of the preceding claims, wherein the plate (54) defines a break in the resilient material for flexibility.

7. The inflatable dunnage bag according to claim 3, wherein the projection (56) is shaped as a hook for engaging one of the walls (14).

8. A supply of a plurality of inflatable dunnage bags in roll form comprising:
a tube of material having a plurality of alternating first and second heat seals (78, 90) and defining the plurality of inflatable dunnage bags, wherein each first heat seal (78) defines a bottom end of an inflatable dunnage bag and each second heat seal (90) defines a top end of an inflatable dunnage bag; and
each inflatable dunnage bag (10) is according to any of the preceding claims.

9. A method of packaging an item in a container using an inflatable dunnage bag according to claim 3, the method comprising:
placing the item (18, 20) into a container (12);
placing an inflatable dunnage bag (10) having a valve assembly (24) into the container, wherein the valve assembly includes a projection (56);
engaging the projection (56) to the container (12) so as to position the valve assembly (24) near a wall (14) of the container (12);
inserting an inflation nozzle (64) through the wall (14) of the container (12) and into the front wall (32) of the valve assembly (24; 84); and
inflating the inflatable dunnage bag (10) by introducing a fluid flow into the inflatable dunnage bag from the inflation nozzle (64) and through the valve assembly (24; 84).

10. The method of claim 9 further comprising placing the item (18, 20) and the inflatable dunnage bag (10) into the container (12) and then closing the container (12) prior to the step of inserting the inflation nozzle (64).

11. The method of claim 9, wherein the step of inserting the inflation nozzle (64) includes the inflation nozzle engaging a flap (58) of the plate (54) such that the flap moves the back wall (34) away from the inflation nozzle (64) and directs the fluid flow through the internal passageway during the step of inflating the bag portion (22).

12. A method of making a supply of a plurality of inflatable dunnage bags (10) in roll form according to claim 8, the method comprising:
forming a plurality of spaced and transverse first seals (78) along a tube of material, wherein each first seal defines a first end of an inflatable dunnage bag (10);
forming a transverse line of weakening (80) on an upstream side of each first seal (78) along the tube of material, wherein each line of weakening (80) defines a second end of an inflatable dunnage bag and each inflatable dunnage bag extends from a second end to a first end in an upstream direction;
inserting a valve assembly (24; 84) into each inflatable dunnage bag between a top film (86) and a bottom film of the tube of material by opening a portion of each line of weakening (80); and
forming a transverse second seal (90) on an upstream side of each line of weakening (80) along the tube of material, such that the second seal (90) connects the valve assembly (24; 84) to the inflatable dunnage bag and seals the second end of the inflatable dunnage bag.

13. The method of claim 12 further comprising a step of, after forming the transverse second seal (90), rolling each inflatable dunnage bag into a supply roll (92) of inflatable dunnage bags.

14. The method of claim 12, wherein the valve assembly (24; 84) defines an internal passageway through which a fluid is introduced into the dunnage bag during an inflation process, and in the step of forming a transverse second seal (90), the valve assembly (24; 84) is connected to the dunnage bag such that an inlet end (30) of the valve assembly is located outside the dunnage bag, and the inlet end (30) includes a front wall (32), a back wall (34), and a plate (54), wherein the plate is positioned at least partially between the front wall (32) and the back wall (34).

15. The method of claim 12, wherein each first seal (78) and an upstream adjacent perforated line are formed in one step.

## Patentansprüche

1. Aufblasbarer Verpackungsbeutel (10) für einen Behälter, der eine oder mehrere Wände definiert, wobei der aufblasbare Verpackungsbeutel aufweist:
einen Beutelabschnitt (22) und
einen mit dem Beutelabschnitt verbundenen Ventilaufbau (24; 84), der es einer Aufblasdüse (64) ermöglicht, den Beutelabschnitt (22) aufzublasen, und der dazu ausgestaltet ist, während des Aufblasprozesses ein Fluid in den Beutelabschnitt einzulassen und, wenn der Beutelabschnitt aufgeblasen ist, das Fluid daran zu hindern, wieder aus dem Beutelabschnitt auszutreten,
**dadurch gekennzeichnet, dass**
der Ventilaufbau (24; 84) eine elastische Platte (54) mit einem oberen Abschnitt und einem unteren Abschnitt umfasst,
wobei der obere Abschnitt relativ zu dem unteren Abschnitt schwenkbar ist, so dass, wenn der obere Abschnitt geschwenkt ist, der untere Abschnitt wenigstens einen Teil des Ventilaufbaus (24; 84) in eine Richtung vorzuspannt, die der Richtung entgegengesetzt ist, in der der obere Abschnitt geschwenkt ist.

2. Aufblasbarer Verpackungsbeutel nach Anspruch 1, wobei der Ventilaufbau (24; 84) mit einem Ende (42) des Beutelabschnitts (22) verbunden ist.

3. Aufblasbarer Verpackungsbeutel nach einem der vorgehenden Ansprüche, wobei die Platte (54) einen Vorsprung (56) aufweist, der aus der Nähe des oberen Endes einer Längsseite der Platte (54) ausgehend auf den Beutelabschnitt zu (22) verläuft, wodurch er dazu ausgestaltet ist, mit dem Behälter so einzugreifen, dass, wenn der Vorsprung (56) mit dem Behälter eingreift, der Ventilaufbau (24; 84) benachbart zu einer der Wände (14) des Behälters (12) liegt.

4. Aufblasbarer Verpackungsbeutel nach einem der vorgehenden Ansprüche, wobei der Ventilaufbau (24) weiter eine Vorderwand (32) und eine Rückwand (34) umfasst und wobei die Platte (54) wenigstens teilweise zwischen der Vorderwand (32) und der Rückwandwand (34) positioniert ist.

5. Aufblasbarer Verpackungsbeutel nach einem der vorgehenden Ansprüche, wobei die Platte eine zentrale Öffnung (60) und eine Klappe (58) umfasst, wobei die Klappe (58) so ausgerichtet ist, um einen Fluidfluss aus der Aufblasdüse (64) durch die zentrale Öffnung (60) durch den Ventilaufbau (24; 84) zu dem Beutelabschnitt (22) zu leiten.

6. Aufblasbarer Verpackungsbeutel nach einem der vorgehenden Ansprüche, wobei die Platte (54) zur Flexibilität eine Durchbrechung in dem elastischen Material definiert.

7. Aufblasbarer Verpackungsbeutel nach Anspruch 3,
wobei der Vorsprung (56) als ein Haken geformt ist, um mit einer der Wände (14) einzugreifen.

8. Vorrat einer Mehrzahl von aufblasbaren Stausäcken in Rollenform mit:
einer Materialröhre mit einer Mehrzahl von abwechselnden erste und zweiten Heißsiegelungen (78, 90), die die Mehrzahl von aufblasbaren Verpackungsbeuteln definieren, wobei jede erste Heißsiegelung (78) ein Unterende eines aufblasbaren Verpackungsbeutels definiert und jede zweite Heißsiegelung (90) ein Oberende eines aufblasbaren Verpackungsbeutels definiert, und
wobei jeder aufblasbare Verpackungsbeutel (10) gemäß einem der vorhergehenden Ansprüche ausgebildet ist.

9. Verfahren zum Verpacken eines Gegenstandes in einem Behälter unter Verwendung eines aufblasbaren Verpackungsbeutels gemäß Anspruch 3, wobei bei dem Verfahren:
der Gegenstand (18, 20) in einem Behälter (12) platziert wird,
ein aufblasbarer Verpackungsbeutel (10) mit einem Ventilaufbau (24) in dem Behälter platziert wird, wobei der Ventilaufbau einen Vorsprung (56) aufweist,
der Vorsprung (56) mit dem Behälter in Eingriff gebracht wird, um so den Ventilaufbau (24) nahe einer Wand (14) des Behälters (12)zu positionieren,
eine Aufblasdüse (64) durch die Wand (14) des Behälters (12) in die Vorderwand (32) des Ventilaufbaus (24; 84) eingeführt wird, und
der aufblasbare Verpackungsbeutel (10) durch Einleiten eines Fluidstroms in den aufblasbaren Verpackungsbeutel aus einer Aufblasdüse (64) und durch den Ventilaufbau (24; 84) aufgeblasen wird.

10. Verfahren nach Anspruch 9, bei dem weiter der Gegenstand (18, 20) und der aufblasbare Verpackungsbeutel (10) in dem Behälter (12) platziert werden und dann der Behälter (12) vor dem Einführen der Aufblasdüse (64) geschlossen wird.

11. Verfahren nach Anspruch 9, wobei der Schritt des Einführens der Aufblasdüse (64) beinhaltet, dass die Aufblasdüse an einer Klappe (58) der Platte (54) angreift, so dass die Klappe die Rückwand (34) von der Aufblasdüse (64) weg bewegt und den Fluidstrom durch den internen Durchgang während des Schritts des Aufblasens des Sackabschnitts (22) lenkt.

12. Verfahren zum Herstellen eines Vorrats einer Mehrzahl von aufblasbaren Verpackungsbeuteln (10) in Rollenform nach Anspruch 8, wobei bei dem Verfahren:
eine Mehrzahl von auf Abstand zueinander liegenden und querverlaufenden ersten Siegelungen (78) entlang eines Röhrenmaterials gebildet wird, wobei jede erste Siegelung ein erstes Ende eines aufblasbaren Verpackungsbeutels (10) definiert,
eine querverlaufende Schwächungslinie (80) an einer stromaufwärtsliegenden Seite jeder ersten Siegelung (78) entlang des Röhrenmaterials gebildet wird, wobei jede Schwächungslinie (80) ein zweites Ende eines aufblasbaren Verpackungsbeutels definiert und wobei jeder aufblasbare Verpackungsbeutel von einem ersten Ende zu einem zweiten Ende in Stromaufwärtsrichtung verläuft,
ein Ventilaufbau (24; 84) in jeden aufblasbaren Verpackungsbeutel zwischen einer oberen Folie (86) und einer unteren Folie des Röhrenmaterials eingeführt wird, indem ein Bereich jeder Schwächungslinie (80) geöffnet wird, und
eine querverlaufende zweite Siegelung (90) auf einer stromaufwärtslinien Seite jeder Schwächungslinie (80) entlang des Röhrenmaterials gebildet wird, so dass die zweite Siegelung (90) den Ventilaufbau (24; 84) mit dem aufblasbaren Verpackungsbeutel verbindet und das zweite Ende des aufblasbaren Verpackungsbeutels versiegelt.

13. Verfahren nach Anspruch 12, bei dem weiter, nach dem Bilden der querverlaufenden zweien Siegelung (90), jeder aufblasbare Verpackungsbeutel auf eine Vorratsrolle (92) mit aufblasbaren Stausäcken aufgerollt wird.

14. Verfahren nach Anspruch 12, wobei der Ventilaufbau (24; 84) einen internen Durchgang definiert, durch den ein Fluid während des Aufblasprozesses in den Verpackungsbeutel eingeführt wird, und wobei in dem Schritt der Bildung einer querverlaufenden zweiten Siegelung (90) der Ventilaufbau (24; 84) mit dem Verpackungsbeutel verbunden wird, so dass ein Einlassende (30) des Ventilaufbaus außerhalb des Verpackungsbeuteles liegt und das Einlassende (30) eine Vorderwand, eine Rückwand (34) und eine Platte (54) umfasst, wobei die Platte wenigstens teilweise zwischen der Vorderwand (32) und der Rückwand (34) liegt.

15. Verfahren nach Anspruch 12, wobei jede erste Siegelung (78) und eine stromaufwärtsliegende benachbarte Perforationslinie in einem Schritt gebildet werden.

## Revendications

1. Sac de fardage gonflable (10) destiné à un conteneur, définissant une ou plusieurs parois
le sac de fardage gonflable comprenant :
une partie sac (22) ; et
un ensemble soupape (24 ; 84) relié à la partie sac pour permettre à une buse de gonflage (64) de gonfler la partie sac (22) et configuré pour laisser entrer un fluide dans la partie sac pendant un processus de gonflage et pour empêcher le fluide de s'échapper de la partie sac lorsque la partie sac est gonflée ;
**caractérisé en ce que**
l'ensemble soupape (24 ; 84) inclut une plaque élastique (54) ayant une partie supérieure et une partie inférieure ;
dans lequel la partie supérieure est pliable par rapport à la partie inférieure de sorte que, lorsque la partie supérieure est pliée, la partie inférieure sollicite au moins une partie de l'ensemble soupape (24 ; 84) dans une direction opposée à la direction dans laquelle la partie supérieure est pliée.

2. Sac de fardage gonflable selon la revendication 1, dans lequel l'ensemble soupape (24 ; 84) est relié à une extrémité (42) de la partie sac (22).

3. Sac de fardage gonflable selon l'une quelconque des revendications précédentes, dans lequel la plaque (54) inclut une saillie (56) s'étendant depuis près du sommet d'un côté longitudinal de la plaque (54) en direction de la partie sac (22), étant de ce fait configurée pour venir en prise avec le conteneur de telle sorte que, lorsque la saillie (56) est en prise avec le conteneur, l'ensemble soupape (24 : 84) est adjacent à une des parois (14) du conteneur (12).

4. Sac de fardage gonflable selon l'une quelconque des revendications précédentes, dans lequel l'ensemble soupape (24) inclut en outre une paroi avant (32) et une paroi arrière (34) et la plaque (54) est positionnée au moins partiellement entre la paroi avant (32) et la paroi arrière (34).

5. Sac de fardage gonflable selon l'une quelconque des revendications précédentes, dans lequel la plaque inclut une ouverture centrale (60) et un rabat (58), dans lequel le rabat (58) est orienté pour diriger un écoulement de fluide à travers l'ouverture centrale (60) à partir d'une buse de gonflage (64) à travers l'ensemble soupape (24 ; 84) jusqu'à la partie sac (22).

6. Sac de fardage gonflable selon l'une quelconque des revendications précédentes, dans lequel la plaque (54) définit une cassure dans le matériau élastique pour la flexibilité.

7. Sac de fardage gonflable selon la revendication 3, dans lequel la saillie (56) est profilée en tant que crochet pour venir en prise avec une des parois (14).

8. Approvisionnement d'une pluralité de sacs de fardage gonflables sous forme de rouleau comprenant :
un tube de matériau ayant une pluralité de premiers et deuxièmes joints thermoscellés en alternance (78, 90) et définissant la pluralité de sacs de fardage gonflables, dans lequel chaque premier joint thermoscellé (78) définit une extrémité inférieure d'un sac de fardage gonflable et chaque deuxième joint thermoscellé (90) définit une extrémité supérieure d'un sac de fardage gonflable ; et
chaque sac de fardage gonflable (10) est selon l'une quelconque des revendications précédentes.

9. Procédé d'emballage d'un article dans un conteneur en utilisant un sac de fardage gonflable selon la revendication 3, le procédé comprenant :
la mise en place de l'article (18, 20) dans un conteneur (12) ;
la mise en place d'un sac de fardage gonflable (10) ayant un ensemble soupape (24) dans le conteneur, dans lequel l'ensemble soupape inclut une saillie (56) ;
la mise en prise de la saillie (56) avec le conteneur (12) de façon à positionner l'ensemble soupape (24) près d'une paroi (14) du conteneur (12) ;
l'insertion d'une buse de gonflage (64) à travers la paroi (14) du conteneur (12) et dans la paroi avant (32) de l'ensemble soupape (24 ; 84) ; et
le gonflage du sac de fardage gonflable (10) en introduisant un écoulement de fluide dans le sac de fardage gonflable à partir de la buse de gonflage (64) et à travers l'ensemble soupape (24 ; 84).

10. Procédé selon la revendication 9, comprenant en outre la mise en place de l'article (18, 20) et du sac de fardage gonflable (10) dans le conteneur (12), puis la fermeture du conteneur (12) avant l'étape d'insertion de la buse de gonflage (64).

11. Procédé selon la revendication 9, dans lequel l'étape d'insertion de la buse de gonflage (64) inclut la buse de gonflage venant en prise avec un rabat (58) de la plaque (54) de telle sorte que le rabat déplace la paroi arrière (34) à l'écart de la buse de gonflage (64) et dirige l'écoulement de fluide à travers le passage interne pendant l'étape de gonflage de la partie sac (22).

12. Procédé de fabrication d'un approvisionnement d'une pluralité de sacs de fardage gonflables (10) sous forme de rouleau selon la revendication 8, le procédé comprenant :
la formation d'une pluralité de premiers joints espacés et transversaux (78) le long d'un tube de matériau, dans lequel chaque premier joint définit une première extrémité d'un sac de fardage gonflable (10) ;
la formation d'une ligne de faiblesse transversale (80) sur un côté amont de chaque premier joint (78) le long du tube de matériau, dans lequel chaque ligne de faiblesse (80) définit une deuxième extrémité d'un sac de fardage gonflable et chaque sac de fardage gonflable s'étend d'une deuxième extrémité à une première extrémité dans une direction en amont ;
l'insertion d'un ensemble soupape (24 ; 84) dans chaque sac de fardage gonflable entre un film supérieur (86) et un film inférieur du tube de matériau en ouvrant une partie de chaque ligne de faiblesse (80) ; et
la formation d'un deuxième joint transversal (90) sur un côté amont de chaque ligne de faiblesse (80) le long du tube de matériau, de telle sorte que le deuxième joint (90) relie l'ensemble soupape (24 ; 84) au sac de fardage gonflable et scelle la deuxième extrémité du sac de fardage gonflable.

13. Procédé selon la revendication 12, comprenant en outre une étape consistant à, après formation du deuxième joint transversal (90), enrouler chaque sac de fardage gonflable en un rouleau d'approvisionnement (92) de sacs de fardage gonflables.

14. Procédé selon la revendication 12, dans lequel l'ensemble soupape (24 ; 84) définit un passage interne à travers lequel un fluide est introduit dans le sac de fardage pendant un processus de gonflage, et dans l'étape de formation d'un deuxième joint transversal (90), l'ensemble soupape (24 ; 84) est relié au sac de fardage de telle sorte qu'une extrémité d'entrée (30) de l'ensemble soupape se situe à l'extérieur du sac de fardage, et l'extrémité d'entrée (30) inclut une paroi avant (32), une paroi arrière (34) et une plaque (54), dans lequel la plaque est positionnée au moins partiellement entre la paroi avant (32) et la paroi arrière (34).

15. Procédé selon la revendication 12, dans lequel chaque premier joint (78) et une ligne perforée adjacente en amont sont formés en une étape.
